(19)

Europäisches
Patentamt
European
Patent Office
Office européen
des brevets

(11) **EP 2 860 577 A1**

(12) **EUROPEAN PATENT APPLICATION**
published in accordance with Art. 153(4) EPC

(43) Date of publication:
**15.04.2015 Bulletin 2015/16**

(21) Application number: **13800870.1**

(22) Date of filing: **03.06.2013**

(51) Int Cl.:
**G02F 1/1333** *(2006.01)* **G02F 1/1345** *(2006.01)*
**G09F 9/00** *(2006.01)*

(86) International application number:
**PCT/JP2013/065389**

(87) International publication number:
**WO 2013/183597 (12.12.2013 Gazette 2013/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.06.2012 JP 2012128239**

(71) Applicant: **NEC CASIO Mobile Communications,
Ltd.**
**Kawasaki-shi**
**Kanagawa 211-8666 (JP)**

(72) Inventor: **SATO, Junya**
**Kawasaki-shi**
**Kanagawa 211-8666 (JP)**

(74) Representative: **Vossius & Partner**
**Siebertstrasse 3**
**81675 München (DE)**

(54) **ELECTRONIC APPARATUS DISPLAY UNIT AND PORTABLE TERMINAL APPARATUS
COMPRISING DISPLAY UNIT**

(57)     An electronic apparatus display unit comprises:
a screen module and an LCD module that are integrated
with a transparent resin to form an LCD (Liquid Crystal
Display) modular structure; and a resin with a dilatancy
property that is arranged in a gap between the screen
module and a first glass substrate in the LCD modular
structure. In the electronic apparatus display unit and a
portable terminal apparatus comprising the electronic ap-
paratus display unit, an external force-resistant property
is improved with respect to a static external force and a
dynamic external force.

FIG. 1

(a)

(b) A-A cross-sectional arrow view of (a)

(c) B-B cross-sectional arrow view of (b)

EP 2 860 577 A1

**Description**

TECHNICAL FIELD

(DESCRIPTION OF RELATED APPLICATION)

This application claims the benefit of Japanese Patent Application No. 2012-128239, filed June 5, 2012, which is hereby incorporated by reference herein in its entirety.
This invention relates to an electronic apparatus display unit and a portable terminal apparatus comprising the same.

BACKGROUND

Today, a portable terminal apparatus, such as a smart phone and a tablet-type PC (Personal Computer), have spread quickly. As to such smart phone and tablet-type PC, a design in which a touch panel is exposed on a surface of the apparatus is a mainstream. Especially, a portable terminal apparatus having a display domain is provided. In the display domain, a screen module is combined so that an LCD (Liquid Crystal Display) module, in which an LCD driver IC (Integrated Circuit) is mounted directly on one LCD glass with COG (Chip On Glass) technology, and the screen module comprising a glass safety film (deletable), a screen glass, and a touch panel are put together so as to arrange the touch panel at a place facing an LCD display surface. Since it is necessary to protect the display domain from an external impulse force or a stress caused by an accidental drop when carrying the portable terminal apparatus or by being pressed in a pocket or bag in addition to a stress caused by a direct touch and operation on the screen, a technology for coping with the need is disclosed.
Patent Literature (PTL) 1 describes a structure, in which deformation caused by an external pressure is prevented from spreading to an LCD module by supporting the LCD module with a frame consisting of a metal and a resin.
Patent Literature 2 describes a complex multilevel interconnection board, comprising a plurality of printed-circuit boards and a plurality of middle layers sandwiched between the boards, wherein at least one of the middle layers include a resin material with a dilatancy property. The complex multilevel interconnection board protects an electronic component(s) on a printed-circuit board from an impact caused by a drop.
Patent Literature 3 describes a module board, comprising a plurality of printed-circuit boards on which electronic component are mounted respectively, and a plurality of middle layers sandwiched between the boards, wherein at least one of the middle layers includes a resin material with a dilatancy property. The module board protects electronic components on a printed-circuit board from an impact caused by a drop.
Non-Patent Literature (NPL) 1 describes a "screen-fit structure in which an LCD module and a screen module are integrated through an ultraviolet curable optical transparent resin in order to improve resistance against an external stress.

CITATION LIST

PATENT LITERATURE

[PTL 1]
Japanese Patent Kokai Publication No. JP2009-069335A
[PTL 2]
WO 2008/146538A1
[PTL 3]
WO 2008/142918A1

NON-PATENT LITERATURE

[NPL 1]
FPD HOT NEWS "TMD TFT-LCD for mobile phones which an improved shock resistance is developed (May 29, 2007)," URL: http://www.e-express.co.jp/past/fpd_0705.htm.

SUMMARY

TECHNICAL PROBLEM

The entire disclosures of the above Patent Literatures 1, 2 and 3 and Non-Patent Literature 1 are incorporated herein by reference thereto. The analysis is set forth below by the present invention.
Patent Literature 1 describes a structure, in which a deformation caused by an external pressure is prevented from spreading to an LCD (Liquid Crystal Display) module by supporting the LCD module with a frame consisting of a metal and a resin. The structure is effective for an external force that bends the portable terminal apparatus as a whole. However, in a case where a static pressure such as a pressure caused by a finger or a strong pressure caused by a surrounding a bag or pocket, is applied, the screen module is modified slowly, and contacts an angle part of an LCD driver IC (Integrated Circuit) on the LCD module. In a case where the static pressure continues being applied after the contact, since both the screen module and the LCD driver IC are formed of brittle materials, there occurs a crack or chip in LCD driver IC because the material cannot resist to a distortion generated in the angle part of the LCD driver IC. Moreover, since movement and deformation in a gap between the LCD module and the screen module are possible when the dynamic external impulse force caused by a drop is applied to a terminal apparatus, deformation of the first glass substrate is not prevented even after the second glass substrate contacts the screen module. Therefore, an inflection point(s) of the deformation occurs at a boundary between the first glass substrate and the second glass substrate. Namely, when a dynamic external impulse force caused by a drop is applied, a concentrated stress is generated at the boundary between the first glass substrate and the second glass substrate, and because the material cannot resist to a distortion generated at the boundary between the first glass substrate and the second glass substrate, thereby there occurs a problem that a stress-concentrated part of the first glass substrate at the boundary between the first glass substrate and the second glass substrate breaks. In addition, there is also a problem that the LCD driver IC and the screen module are broken by a collision between the LCD driver and the screen module.

Non-Patent Literature 1 describes a "screen-fit structure," in which an LCD module and a screen module are integrated with an ultraviolet curable optical transparent resin for improving the above mentioned resistance against an external stress. However, since the LCD module (the first glass substrate, the LCD driver IC, the FPC (Flexible Printed Circuit)) and the screen module are completely separated, there is a large space between them. In a case where a static pressure such as a pressure caused by a finger or a strong pressure caused by a surrounding bag or pocket, is applied, there occurs a crack or chip in the LCD driver IC, in a similar manner as the above-mentioned Patent Literature 1. Further, when the dynamic external impulse force caused by a drop is applied to a terminal apparatus, since the first glass substrate can move freely at a non-overlap region between the first glass substrate and the second glass substrate, an inflection point(s) of deformation occurs at a boundary between the first glass substrate and the second glass substrate. That is, a concentrated stress is generated at a boundary between the first glass substrate and the second glass substrate and the fragile glass material cannot resist the distortion generated at the boundary between the first glass substrate and the second glass substrate, thereby there occurs a problem that a stress-concentrated part of the first glass substrate at the boundary between the first glass substrate and the second glass substrate breaks. In addition, in a similar manner as Patent Literature 1, there is also a problem that the LCD driver IC and the screen module are broken by a collision between the LCD driver and the screen module. Moreover, as to an FPC on the first glass substrate, there is also a problem of degradation of electric reliability because a peeling stress is applied to a connection place(s) between the FPC and the first glass substrate (usually, bonded by thermo-compression using ACF (Anisotropic Conductive Film)), when the dynamic external impulse force caused by a drop is applied to a terminal apparatus.

In this structure, in case of inserting an impact-absorbing spacer comprising a foamed rubber and a superelastic resin material into such space portion, destruction caused by a contact between the screen module and the LCD driver IC can be prevented when a static pressure (i.e. a static external force) such as a pressure caused by a finger or a strong pressure caused by a surrounding bag or pocket is applied to the space portion of the screen module. However, there is a problem: when a dynamic external impulse force (i.e. a dynamic external force) caused by a drop is applied to a terminal apparatus, a deformation of the first glass substrate cannot be absorbed in such impact-absorbing spacer, the screen module and the first glass substrate deform and vibrate independently, breakage by a contact collision of the LCD driver IC with the screen module and a concentrated stress occurs at a boundary between the first glass substrate and the second glass substrate are generated, and a destruction occurs at the boundary.

Moreover, in case of inserting and adhering a spacer comprising a polymer molecule resin material such as polycarbonate or ABS (Acrylonitrile Butadiene Styrene) into such space portion, while the screen module and the first glass substrate deform and vibrate in combination and the breakage by the contact collision of the LCD driver IC with the screen module and the breakage because of concentrated stress at the boundary between the first glass substrate and the second glass substrate are hardly generated when the above dynamic external force is applied to a terminal apparatus, there is also a problem that the deformation of the screen module spreads to the first glass substrate directly, a concentrated stress occurs at a boundary between the first glass substrate and the second glass substrate, and this portion breaks when the above static external force is applied.

That is, a problem with respect to a static external force and a problem with respect to a dynamic external force have not yet been solved simultaneously.

Moreover, Patent Literature 2 and 3 relate to a structure with a middle layer(s) comprising a resin material with a dilatancy property for protecting an electronic component(s) on the printed-circuit board from an impact caused by a drop. Since a main purpose of the structure is to control an initial amplitude and remaining vibrations of bending deformation caused by an impulse force caused by a drop, a compression direction deformation of the middle layer (dilatancy resin) is not considered in this structure. Namely, in the structure of Patent Literatures 2 and 3, if a deformation for compressing the middle layer is generated, since electric wiring, solder resist, pads for connection, etc. are provided for the surface layer of the printed-circuit board, a smoothness of the surface is very low. Consequently, an adhesiveness between the middle layer and the printed-circuit board is also low. Since the resin with the dilatancy property has small restorability (capability returning to the initial form), the resin keep the form after compression in case of compressing the resin simply. Then, in case of removing the static external force if the adhesiveness with the resin with the dilatancy property is high, the resin with the dilatancy property follows the restorability of the substrate, and recovers its initial form. However, when the restorability of the printed-circuit board after compressive deformation causes the middle layer to recover its initial, an air layer is easily generated at an interface between the printed-circuit board and middle layer because of its low adhesiveness, the adhesiveness falls remarkably and an exfoliation occurs. Therefore, there occurs a problem that the restorability of the printed-circuit board cannot cause the middle layer to recover its initial form.

However, in order to solve the problem caused by such external force, i.e. to increase or improve the external force-resistant property to such external force, there is still room for consideration. Especially, more effective use of the resin with the dilatancy property (for example, arrangement (installation) or spatial relationship with other components) is necessary.

It is an object of the present invention to provide an electronic apparatus display unit having further increased or improved external force-resistant property and a portable terminal apparatus comprising the electronic apparatus display unit by solving simultaneously the problems of the external force-resistant property to the static external force and the dynamic external force, which have not been solved simultaneously.

SOLUTION TO PROBLEM

According to a first aspect of the present invention, there is provided an electronic apparatus display unit, comprising: a screen module and an LCD module that are integrated with a transparent resin to form an LCD (Liquid Crystal Display) modular structure; and a resin with a dilatancy property that is arranged in a gap between the screen module and a first glass substrate in the LCD modular structure.

According to another aspect of the present invention, there is provided a portable terminal apparatus comprising the above electronic apparatus display unit.

According to yet another aspect of the present invention, there is provided is a portable terminal apparatus, comprising a display unit. The display unit comprises: a screen module and an LCD module that are integrated with a transparent resin to form an LCD (Liquid Crystal Display) modular structure; and a resin with a dilatancy property that is arranged in a gap between the screen module and a first glass substrate in the LCD modular structure.

ADVANTAGEOUS EFFECTS OF INVENTION

According to the present invention, external force-resistant properties to a static external force and a dynamic external force are improved simultaneously by arranging a resin with a dilatancy property in a gap between a first glass substrate and a screen module. Therefore, an electronic apparatus display unit, which can be protected from an external impulse force or stress, can be provided. Since a specular surface finish is carried out for a surface of a transparent substrate used for a display unit (LCD module) of an electronic apparatus, the surface has very high smoothness. Therefore, when an adhesiveness between the transparent substrate and the resin with the dilatancy property is high and the static external force being pressurized so as to generate a compression direction deformation to the display unit is removed, the resin with the dilatancy property can follow the restorability of the transparent substrate, and the resin can recover its initial form. That is, such display unit of the electronic apparatus can be protected also from a stress for generating a compression direction deformation.

Furthermore, even when the dynamic external impulse force caused by a drop is applied to the portable terminal apparatus comprising such display unit, lowering of an electric reliability can be prevented.

Therefore, according to the present invention, a portable terminal apparatus comprising a display unit, in which external force-resistant properties to a static external force and a dynamic external force are improved simultaneously, can be provided.

BRIEF DESCRIPTION OF DRAWINGS

Fig. 1 is a conceptual illustration illustrating an electronic apparatus display unit according to an exemplary embodiment of the present invention;
Fig. 2 is a view illustrating a property of a viscous material expressed by a formula (1);
Fig. 3 is a view illustrating a structure of a display unit of a portable terminal apparatus according to a first exemplary embodiment of the present invention;
Fig. 4 is a view illustrating a display unit of a portable terminal apparatus according to a second exemplary embodiment of the present invention;
Fig. 5 is a view illustrating a display unit of a portable terminal apparatus according to a third exemplary embodiment of the present invention;
Fig. 6 is a view illustrating a display unit of a portable terminal apparatus according to a fourth exemplary embodiment of the present invention;
Fig. 7 is a view illustrating a display unit of a portable terminal apparatus according to a fifth exemplary embodiment of the present invention;
Fig. 8 is a view illustrating a display unit of a portable terminal apparatus according to a sixth exemplary embodiment of the present invention;
Fig. 9 is a view illustrating a display unit of a portable terminal apparatus according to a seventh exemplary embodiment of the present invention;
Fig. 10 is a view illustrating a display unit of a portable terminal apparatus according to an eighth exemplary embodiment of the present invention;
Fig. 11 is a view illustrating a display unit of a portable terminal apparatus according to a ninth exemplary embodiment of the present invention;

Fig. 12 is a view illustrating a display unit of a portable terminal apparatus according to a tenth exemplary embodiment of the present invention;

Fig. 13 is a view illustrating a display unit of a portable terminal apparatus according to an eleventh exemplary embodiment of the present invention;

Fig. 14 is a sectional view illustrating one exemplary example of a related display unit of a portable terminal apparatus;

Fig. 15 is a conceptual illustration illustrating one exemplary example of a related display unit of a portable terminal apparatus.

DESCRIPTION OF EMBODIMENTS

Below, a general description of one exemplary embodiment of the present invention is explained with reference to Drawings. In addition, reference signs of Drawings appended to this general description are illustrations for helping understanding of the present invention exclusively, and do not mean limiting the present invention to the modes of illustrations of Drawings.

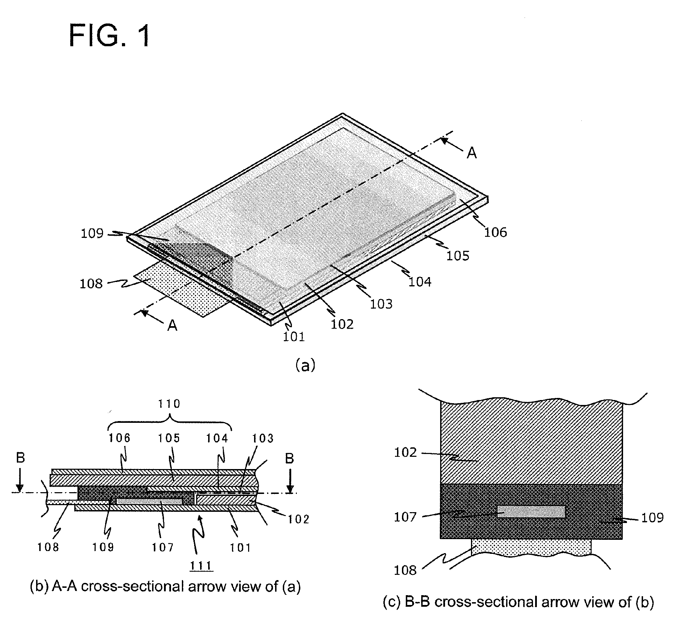

An electronic apparatus display unit according to an exemplary embodiment of the present invention as illustrated in Fig. 1 is, for example, a display unit of a portable terminal apparatus. The display unit comprises an LCD (Liquid Crystal Display) module and a screen module that are integrated with an ultraviolet curable optical transparent resin to form a "screen-fit structure" as described above. The display unit further comprises a resin with a dilatancy property that is arranged in a gap (space) between a first glass substrate and the screen module. The ultraviolet curable transparent resin cannot be applied to the gap.

Concretely, as illustrated in Fig. 1, in the display unit of the portable terminal apparatus, the LCD module 111 forming the "screen-fit structure" comprises a FPC (Flexible Printed Circuit) 108 and a second glass substrate 102. Based on a COG (Chip On Glass) method, the FPC 108 mounts on the first glass substrate 101 an LCD driver IC (Integrated Circuit) 107 for controlling driving and displaying of an LCD. Further, the FPC 108 connects the LCD driver IC 107 with a circuit substrate (not shown). A screen module 110 comprises: a glass safety film 106; a screen glass 105; and a touch panel 104. In the "screen-fit structure," in which the LCD module 111 and the screen module 110 are integrated with the ultraviolet curable transparent resin 103, a resin with a dilatancy property 109 is arranged in a gap (space) between the first glass substrate 101 and the screen module 110. An ultraviolet curable transparent resin 103 cannot be applied to the gap.

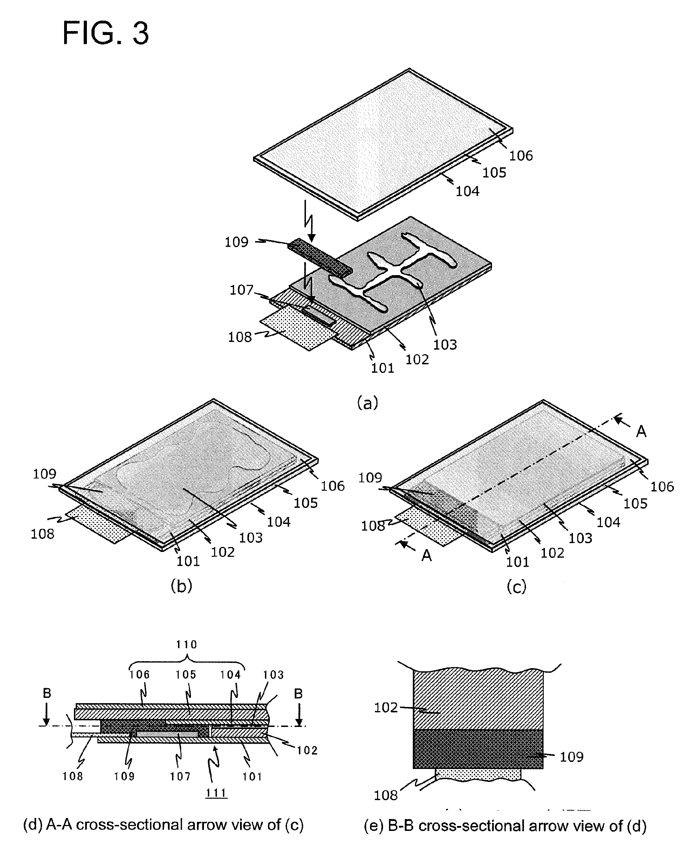

An application form (shape) is not restricted as long as the resin with the dilatancy property 109 arranged in the gap between the first glass substrate 101 and the screen module 110 can be formed in the gap. The application form of the resin with the dilatancy property 109 may be arranged so that whole of the gap is filled or may be arranged so that part of the gap is filled. Although the resin with the dilatancy property 109 may be arranged as explained in the following first to eleventh exemplary embodiments (refer to Figs. 3 to 13), the arrangement can be made into various form as long as the resin with the dilatancy property 109 can be formed in the gap.

In addition, it is not necessary for the screen module 110 to comprise the glass safety film 106 or the touch panel 104. One or both of the glass safety film 106 and the touch panel 104 may be omitted from the screen module 110. Furthermore, the screen glass 105 may not be a glass material. A transparent resin, such as acrylics and polycarbonate may also be employed.

In addition, as another exemplary embodiment of the present invention, while not shown in the drawings, there is provided a portable terminal apparatus comprising the above-mentioned electronic apparatus display unit.

As yet another exemplary embodiment of the present invention, while not shown in the drawings, there is provided a portable terminal apparatus comprising a display unit having an LCD modular structure in which a screen module and an LCD module are integrated with a transparent resin, wherein a resin with a dilatancy property is arranged in a gap between a first glass substrate and the screen module.

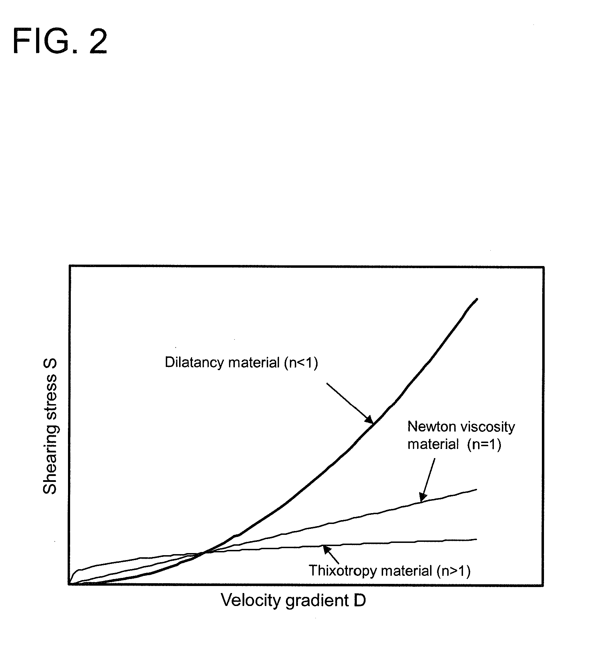

A dilatancy property means a kind of nonlinear viscoelasticity. The dilatancy means that, while shearing stress is small under a static environment, shearing stress increases rapidly under a dynamic environment depending on its shear rate. In more detail, a dilatancy property is a property of a viscous material expressed in the following formula 1 with n < 1. In the formula, a shearing stress is denoted by S, a shearing viscosity by $\eta s$, and a velocity gradient by D. An example of a dilatancy property of such viscous material is shown in Fig. 2. According to this property, as illustrated in Fig.2, as a velocity gradient D increases, a rate of increase of shearing stress S increases rapidly when n < 1. In addition, a case where n = 1 expresses a newton viscosity material, in which shearing stress S increases in (a linear) proportion to the velocity gradient D. A case where n > 1 expresses a thixotropy material, in which a rate of increase of shearing stress S decreases as the velocity gradient D increases.

$$S = \eta_s \cdot D^{\frac{1}{n}}$$

(Formula 1)

That is, by arranging in a gap between the first glass substrate and the screen module a resin with a dilatancy property, whose shearing stress is small under a static environment and increases rapidly according to a shear rate under a dynamic environment, in a case where a static pressure such as a pressure caused by a finger or a strong pressure caused by a surrounding bag or pocket is applied to the screen module, a destruction caused by a contact between the screen module and the LCD driver IC can be prevented. The shearing stress is low because the shear rate concerning the resin with the dilatancy property is low and the resin with the dilatancy property is deformed easily. Accordingly, a deformation of the screen module is not spread to the first glass substrate directly. Therefore, the concentrated stress does not occur at a boundary between the first glass substrate and the second glass substrate, and this portion is not broken.

Moreover, in a case where a dynamic external impulse force caused by a drop is applied, the shearing stress is high because the shear rate concerning the resin with the dilatancy property is high, the resin with the dilatancy property is difficult to be deformed and to become a composite laminate layer because the screen module and the first glass substrate are integrated. Since the composite rigidity increases sharply compared with the screen module or the first glass substrate single body, destruction caused by stress concentration to the boundary between the first glass substrate and the second glass substrate and breakage caused by contact between the LCD driver IC and the screen module are prevented. Moreover, when a dynamic external impulse force caused by a drop is applied, since the connection portion (usually, bonded by thermo-compression using ACF) between FPC and the first glass substrate is put with the screen module by the resin with the dilatancy property, lowering of an electric reliability can be prevented, even when a peel-way stress is applied.

Accordingly, the portable terminal apparatus, in which the external force-resistant property to the static external force and the dynamic external force in the display unit is improved simultaneously, is realized by arranging the resin with the dilatancy property in the gap (space) forming a screen-fit structure, i.e., the gap between the first glass substrate and the screen module, to which the ultraviolet curable transparent resin cannot be applied.

Next, in order to help understanding of the present invention, a related technique is explained with reference to drawings.

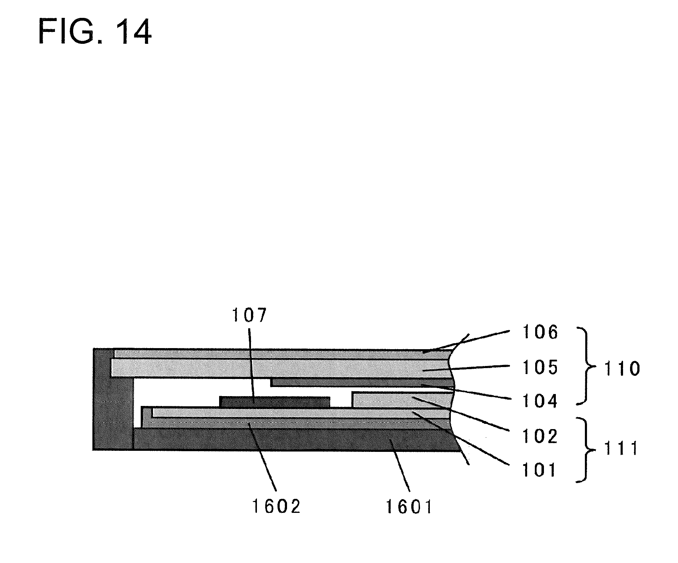

Fig. 14 is a sectional view illustrating an example of a related display unit of a portable terminal apparatus as described in Patent Literature 1. As illustrated in Fig. 14, by supporting an LCD module with a frame formed of a metal (1601) and a resin (1602), a deformation by an external pressure does not spread to the LCD module. This structure is effective for an external force that bends the portable terminal apparatus bends as a whole. However, in a case where a static pressure such as a pressure caused by a finger or a strong pressure caused by a surrounding bag or pocket is applied, as described in the above, the screen module 110 deforms slowly and contacts an angle part of the LCD driver IC 107 on the LCD module 111. Since both the screen module 110 and the LCD driver IC 107 are brittle materials, in a case where the static pressure continues to be applied after the contacting, materials cannot resist to a distortion generated at the angle part of the LCD driver IC 107, and a crack or chip occurs at the LCD driver IC 107. Moreover, in a case where a dynamic external impulse force caused by a drop is applied to a portable terminal apparatus, since the LCD module 111 can move and deform in the gap between the LCD module 111 and the screen module 110, the deformation of the first glass substrate 101 cannot be prevented, even after the second glass substrate 102 contacts the screen module 110. Therefore, an inflection point(s) of deformation occurs at a boundary between the first glass substrate 101 and the second glass substrate 102. That is, when a dynamic external impulse force caused by a drop is applied, the concentrated stress occurs at a boundary between the first glass substrate 101 and the second glass substrate 102, such structure cannot resist to a distortion generated at the boundary between the first glass substrate 101 and the second glass substrate 102, and the stress concentrated part of the first glass substrate 101 at the boundary between the first glass substrate 101 and the second glass substrate 102 is broken. In addition, the LCD driver IC 107 and the screen module 110 may be destroyed by the collision of the LCD driver IC 107 with the screen module 110.

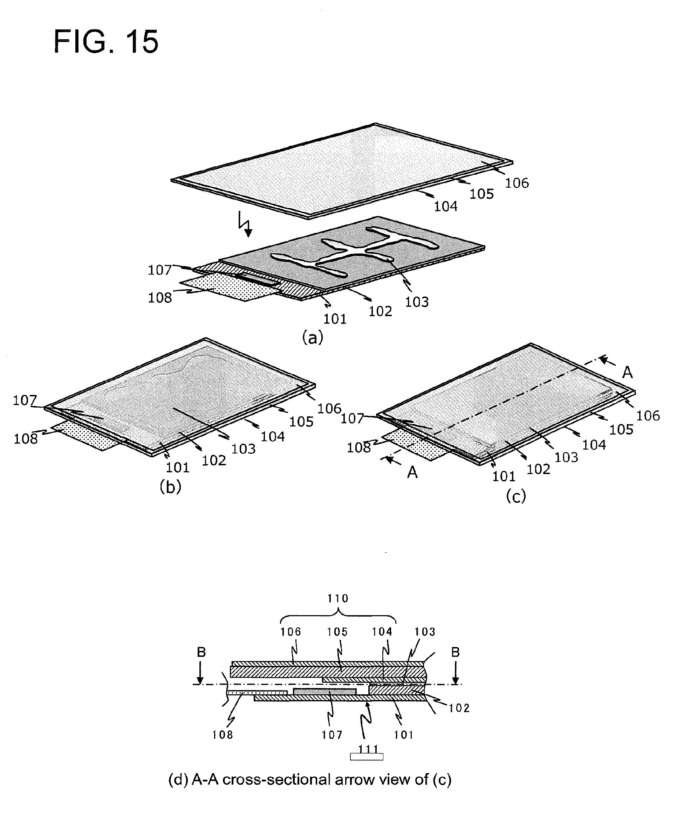

Fig. 15 is a conceptual illustration illustrating an example of a related display unit of a portable terminal apparatus as described in Non-Patent Literature 1. It is a portable terminal apparatus having a "screen-fit structure," in which an LCD module and a screen module are integrated with an ultraviolet curable optical transparent resin in order to improve external stress-resistant property, as mentioned above. The structure is explained below in detail.

The structure comprises a screen module 110 consisting of a glass safety film 106, a screen glass 105 and a touch panel 104; an LCD module 111 consisting of an FPC 108 that mounts based on a COG (Chip On Glass) method, on a first glass substrate 101, an LCD driver IC 107 for controlling driving and displaying of an LCD and connects the LCD driver IC 107 to a circuit substrate (not shown) and a second glass substrate 102; and the ultraviolet curable transparent resin 103. An ultraviolet curable transparent resin 103 is applied onto a top of the second glass substrate 102 of the LCD module 111 with an approximately line shape (Fig. 15 (a)). Next, the screen module 110 is contacted to the LCD module 111, and a pressure is applied gradually thereto. At this time, the ultraviolet curable transparent resin 103 spreads as a gap between the screen module 110 and the second glass substrate 102 narrows (Fig. 15 (b)).

It is necessary to precisely manage a distance between the LCD module 111 and the screen module 110 because it affects the display property of LCD greatly. For the same reason, it is necessary to manage the ultraviolet curable transparent resin 103 strictly so that the unevenness of thickness, coating remnants, air bubbles and so on do not occur. Moreover, in a case where the ultraviolet curable transparent resin 103 spreads out of the LCD module 111, there is also a case where this overflowed part meets the portable terminal apparatus and the display unit cannot be incorporated to the portable terminal apparatus. Usually, in order to perform those managements, after measuring strictly the volume (weight) of the ultraviolet curable transparent resin 103, it is applied to the LCD module 111. When the distance between the LCD module 111 and the screen module 110 turns into a desired distance according to this pressurization process, the unevenness of thickness, coating remnants, air bubbles, etc. of the ultraviolet curable transparent resin 103 are not generated and the volume (weight) of the ultraviolet curable transparent resin 103 is managed in the quantity which is not overflowed out of the LCD module 111. This force is preliminary set up to balance with repelling force thereof, when the distance between the LCD module 111 and the screen module 110 turns into the desired distance.

Pressuring in a managed state as mentioned above, in a case where the distance between the LCD module 111 and the screen module 110 becomes a desired value, an ultraviolet-ray is irradiated from the screen module 110 using the ultraviolet-rays lamp and so on (not shown) so as to cure the ultraviolet curable transparent resin 103 completely. At this time, since the volume (weight) of the ultraviolet curable transparent resin 103 is managed strictly as mentioned above, the unevenness of thickness, coating remnants, air bubbles, etc of the ultraviolet curable transparent resin 103 are not generated. Furthermore, the "screen-fit structure" is completed by integrating the LCD module 111 in which there is no overflow out of the LCD module 111 and the screen module 110 with the ultraviolet curable transparent resin 103 (Fig. 15 (c)).

However, in "screen-fit structure" illustrated in Fig. 15, the first glass substrate 101, the LCD driver IC 107 and FPC 108 of the LCD module 111 and the screen module 110 are separated completely, and a large space exists (region where the second glass substrate 102 does not exist, and the first glass substrate 101 and the screen module 110 are overlapped) (Fig. 15 (d)). This is partly because the ultraviolet curable transparent resin 103 applied approximately in a line shape on the top of the second glass substrate 102 of the LCD module 111 cannot be forced to overflow into the space only by pressurization control. Moreover, this is partly because the viscosity before ultraviolet exposure is as low as 0.01-20 Pa-s as for the ultraviolet curable transparent resin 103, when the ultraviolet curable transparent resin 103 of sufficient quantity which can fill this space is applied in advance, it flows out of the first glass substrate 101, and a sufficient quantity of the ultraviolet curable transparent resin 103 cannot be applied.

Therefore, in "screen-fit structure" illustrated in Fig. 15, when a static pressure such as a pressure caused by a finger or a strong pressure caused by a surrounding bag or pocket is applied to this space portion of the screen module 110, the screen module 110 deforms slowly and contacts the angle part of the LCD driver IC 107 on the LCD module 111. Since both the screen module 110 and the LCD driver IC 107 are brittle materials, in a case where the static pressure continues to be applied after the contacting, materials cannot resist to a distortion generated at the angle part of the LCD driver IC 107, and there occurs a case that a crack or chip occurs at the LCD driver IC 107. Moreover, in a case where a dynamic external impulse force caused by a drop is applied to a portable terminal apparatus, since the first glass substrate 101 can move freely in the region where the first glass substrate 101 and the second glass substrate 102 do not overlap, the inflection point(s) of deformation occurs at the boundary between the first glass substrate 101 and the second glass substrate 102. That is, the concentrated stress occurs at the boundary between the first glass substrate 101 and the second glass substrate 102, and the glass board material which is brittle material cannot resist to a distortion generated at the boundary between the first glass substrate 101 and the second glass substrate 102. Accordingly, there occurs a case that the stress concentrated part of the first glass substrate 101 at the boundary between the first glass substrate 101 and the second glass substrate 102 is broken. In addition, there may be a case that the LCD driver IC 107 and the screen module 110 are destroyed by the collision between the LCD driver IC 107 and the screen module 110. Furthermore, as to the FPC 108 on the first glass substrate 101, when a dynamic external impulse force caused by a drop is applied, the peel-way stress is applied to the connection place (usually, bonded by thermo-compression using ACF) between FPC and the first glass substrate, there is also a case that the electric reliability may fall.

In the case where an impact-absorbing spacer formed of a foamed rubber or a superelastic resin material is inserted into the space portion, there occur the following cases. When a static pressure such as a pressure caused by a finger or a strong pressure caused by a surrounding bag or pocket is applied to the space portion of the screen module 110, destruction caused by a contact between the screen module 110 and the LCD driver IC 107 can be prevented. However, when a dynamic external impulse force caused by a drop is applied, deformation of the first glass substrate 101 cannot be absorbed in the impact-absorbing spacer formed of a superelastic resin material such as a foamed rubber, and the screen module 110 and the first glass substrate 101 deform and vibrate independently, a breakage caused by a contact collision of the LCD driver IC 107 with the screen module 110 occurs, and a concentrated stress occurs at the boundary between the first glass substrate 101 and the second glass substrate 102, thereby this portion is broken.

Moreover, in a case where a spacer formed of a macromolecule resin material such as polycarbonate or ABS is inserted into the space portion and fixed, there occur the following cases. When a dynamic external impulse force caused by a drop is applied, the screen module 110 and the first glass substrate 101 deform and vibrate in combination, and a breakage caused by a contact collision of the LCD driver IC 107 with the screen module 110 and a breakage caused by a concentrated stress at the boundary between the first glass substrate 101 and the second glass substrate 102 hardly occurs. However, when a static pressure such as a pressure caused by a finger or a strong pressure caused by a surrounding bag or pocket is applied to the space portion of the screen module 110, a deformation of the screen module 110 spreads to the first glass substrate 101 directly, the concentrated stress occurs at the boundary between the first glass substrate 101 and the second glass substrate 102, and this portion breaks.

Note that part or all the above exemplary embodiment may also be described as the following modes, while not restricted to the following.

<Mode 1>

An electronic apparatus display unit may be the electronic apparatus display unit according to the first aspect. Namely, an electronic apparatus display unit may comprise: a screen module and an LCD module that are integrated with a transparent resin to form an LCD (Liquid Crystal Display) modular structure; and a resin with a dilatancy property that is arranged in a gap between the screen module and a first glass substrate in the LCD modular structure.

<Mode 2>

In the electronic apparatus display, the resin with the dilatancy property may be arranged in a shape of an approximate square ring around an LCD driver IC (Integrated Circuit).

<Mode 3>

In the electronic apparatus display unit, the resin with the dilatancy property may be arranged at three sides of the first glass substrate that are not a boundary of a second glass substrate.

<Mode 4>

In the electronic apparatus display unit, the resin with the dilatancy property may be arranged at a boundary of a second glass substrate and at two sides of the first glass substrate that are not opposed to the boundary.

<Mode 5>

In the electronic apparatus display unit, the resin with the dilatancy property may be arranged at a boundary of a second glass substrate and at one side of the first glass substrate that is opposed to the boundary.

<Mode 6>

In the electronic apparatus display unit, the resin with the dilatancy property may be arranged at two sides of the first glass substrate that are not opposed to a boundary of a second glass substrate.

<Mode 7>

In the electronic apparatus display unit, the resin with the dilatancy property may be arranged at one side of the first glass substrate that is opposed to a boundary of a second glass substrate.

<Mode 8>

In the electronic apparatus display unit, the resin with the dilatancy property may be arranged at one side of the first glass substrate that is a boundary of a second glass substrate.

<Mode 9>

In the electronic apparatus display unit, the resin with the dilatancy property may be arranged at a region obtained by removing two sides of the first glass substrate that are not opposed to a boundary of a second glass substrate from a region at which the resin with the dilatancy property is arranged in the electronic apparatus display unit according to Mode 1.

<Mode 10>

In the electronic apparatus display unit, the resin with the dilatancy property may be arranged at a region obtained by removing two sides of the first glass substrate that are not opposed to a boundary of a second glass substrate from a region at which the resin with the dilatancy property is arranged in the electronic apparatus display unit according to Mode 2.

<Mode 11>

In the electronic apparatus display unit, the resin with the dilatancy property may be arranged at a back side of the first glass substrate and extend over a boundary of a second glass substrate.

<Mode 12>

A portable terminal apparatus may be the portable terminal apparatus according to the second aspect. Namely, a portable terminal apparatus may comprise the display unit described in any one of the above Modes.

<Mode 13>

A portable terminal apparatus may be the portable terminal apparatus according to the third aspect. Namely, a portable terminal apparatus may comprise a display unit. The display unit may comprise: a screen module and an LCD module that are integrated with a transparent resin to form an LCD (Liquid Crystal Display) modular structure; and a resin with a dilatancy property that is arranged in a gap between the screen module and a first glass substrate in the LCD modular structure.

In the following, exemplary embodiments of the present invention are explained with reference to Drawings. In addition, in the following explanation, reference signs of Drawings are appended for understanding the present invention, and it is not intended to limit the present invention to the mode of illustration.

<First Exemplary Embodiment>

Fig. 3 (a)-(e) are illustrations of a structure of a display unit of a portable terminal apparatus according to a first exemplary embodiment of the present invention.

The structure of the display unit of the portable terminal apparatus according to the first exemplary embodiment of the present invention comprises a screen module 110 comprising a glass safety film 106, a screen glass 105 and a touch panel 104; an LCD module 111 comprising FPC 108 for mounting a LCD driver IC 107 which controls driving and displaying of LCD with a COG (Chip On Glass) system on a first glass substrate 101 and connecting the LCD driver IC 107 to a circuit substrate (not shown) and a second glass substrate 102; an ultraviolet curable transparent resin 103; and a resin with a dilatancy property 109.

At first, the ultraviolet curable transparent resin 103 is applied approximately in a line shape onto a top of the second glass substrate 102 of the LCD module 111, and the resin with the dilatancy property 109 cut out in a shape of a block is arranged on the first glass substrate 101 so as to cover the LCD driver IC 107 and the FPC 108. At this time, the resin with the dilatancy property 109 is thicker than the second glass substrate 102, in a shape which is not overflowed out of an exposed surface the first glass substrate 101, which exposes from the second glass substrate 102, and it is managed so that the resin 109 may not be overflowed out of the first glass substrate 101 even after a pressurization process mentioned below (Fig. 3 (a)).

Next, the screen module 110 is contacted to the LCD module 111, and a pressure is applied gradually thereto. At this time, the ultraviolet curable transparent resin 103 spreads as the gap between the screen module 110 and the second glass substrate 102 narrows. The resin with the dilatancy property 109 spreads as the gap between the screen module 110 and the first glass substrate 101 narrows (Fig.3 (b)).

It is necessary to presicely manage the distance between the LCD module 111 and the screen module 110 because it affects the display property of LCD greatly. For the same reason, it is necessary to manage the ultraviolet curable transparent resin 103 strictly so that the unevenness of thickness, coating remnants, air bubbles, and so on do not occur. Moreover, in a case where the ultraviolet curable transparent resin 103 spreads out of the LCD module 111, there is also a case where this overflowed part meets the portable terminal apparatus and the display unit cannot be incorporated into the portable terminal apparatus. Accordingly, after measuring strictly the volume (weight) of the ultraviolet curable transparent resin 103, it is applied to the LCD module 111. In the structure of the present invention, the resin with the dilatancy property 109 cut out in a shape of a block is arranged on the first glass substrate 101 so as to cover the LCD driver IC 107 and the FPC 108. Therefore, when the distance between the LCD module 111 and the screen module 110 becomes the desired distance, the resin with the dilatancy property 109 is not overflowed out of the first glass substrate 101. Moreover, a sufficient volume (weight) required for filling completely the space between the first glass substrate 101 and the screen module 110 is measured in advance. This force is set up in advance so that this force and a repelling force thereof are in balance with each other, when the distance between the LCD module 111 and the screen module 110 turns into the desired distance. Pressuring in a managed state as mentioned above, in a case where the distance between the LCD module 111 and the screen module 110 becomes a desired value, an ultraviolet-ray is irradiated from the screen module 110 using the ultraviolet-rays lamp etc (not shown) so as to cure the ultraviolet curable transparent resin 103 completely (Fig. 3 (c)).

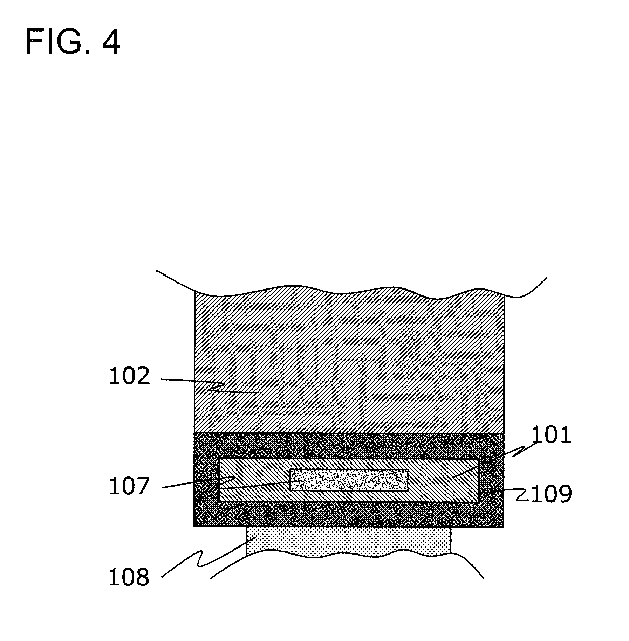

Fig. 4 to Fig.13 are illustrations of a structure of a second to eleventh exemplary embodiments of a display unit of a portable terminal apparatus of the present invention. A difference between these exemplary embodiments and the first exemplary embodiment is an applied-shape of the resin with the dilatancy property 109 existed in the gap between the first glass substrate 101 and the screen module 110, and except it, the second to eleventh exemplary embodiments are same as the first exemplary embodiment.

<Second Exemplary Embodiment>

In a second exemplary embodiment, as illustrated in Fig. 4, the resin with the dilatancy property 109 is arranged in a shape of an approximate square ring around the LCD driver IC 107.

<Third Exemplary Embodiment>

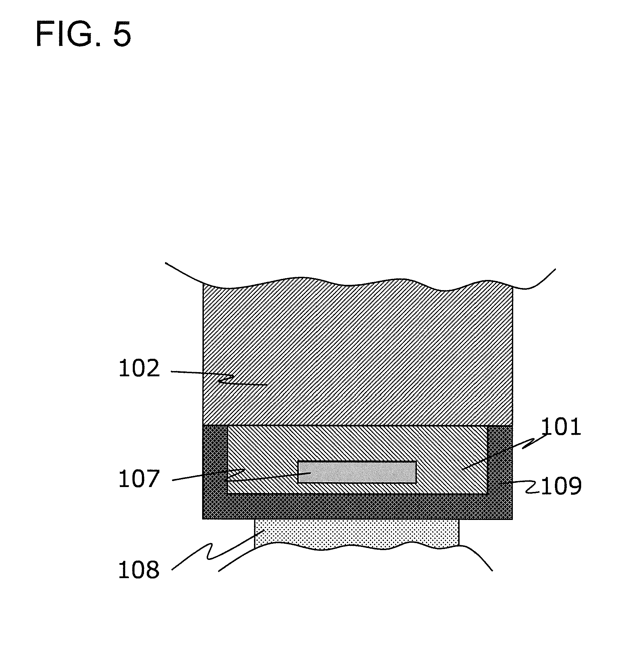

In a third exemplary embodiment, as illustrated in Fig. 5, the resin with the dilatancy property 109 is arranged at three sides of the first glass substrate 101 that are not a boundary of the second glass substrate 102.

<Fourth Exemplary Embodiment>

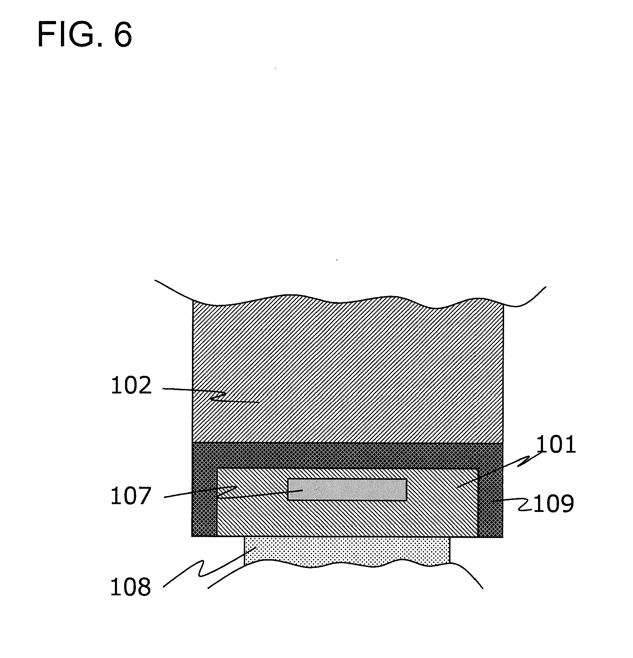

In a fourth exemplary embodiment, as illustrated in Fig. 6, the resin with the dilatancy property 109 is arranged and at a boundary of the second glass substrate 102 and at two sides of the first glass substrate 101 that are not opposed to the boundary of the second glass substrate 102.

<Fifth Exemplary Embodiment>

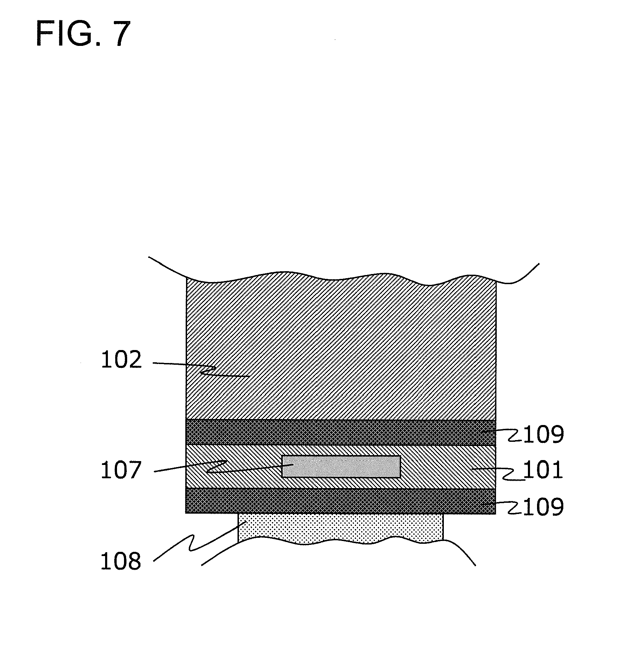

In a fifth exemplary embodiment, as illustrated in Fig. 7, the resin with the dilatancy property 109 is arranged at a boundary of the second glass substrate 102 and at one side of the first glass substrate 101 that is opposed to the boundary of the second glass substrate 102.

<Sixth Exemplary Embodiment>

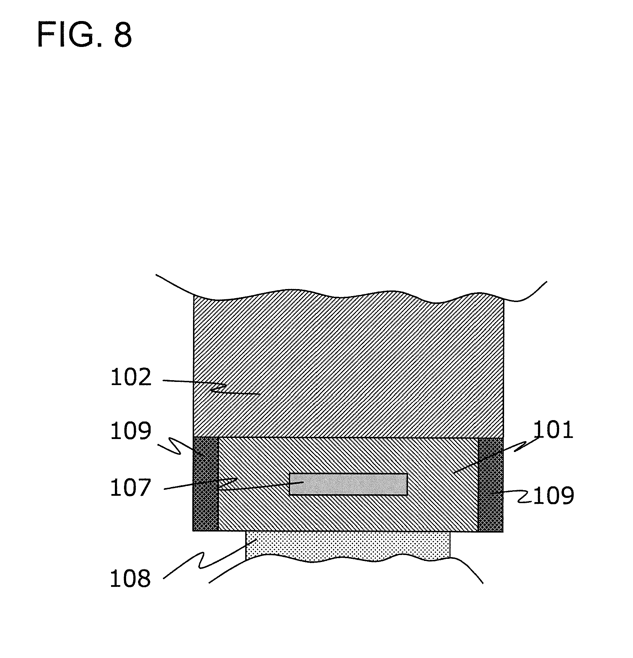

In a sixth exemplary embodiment, as illustrated in Fig. 8, the resin with the dilatancy property 109 is arranged at two sides of the first grass substrate that are not opposed to a boundary of the second glass substrate 102.

<Seventh Exemplary Embodiment>

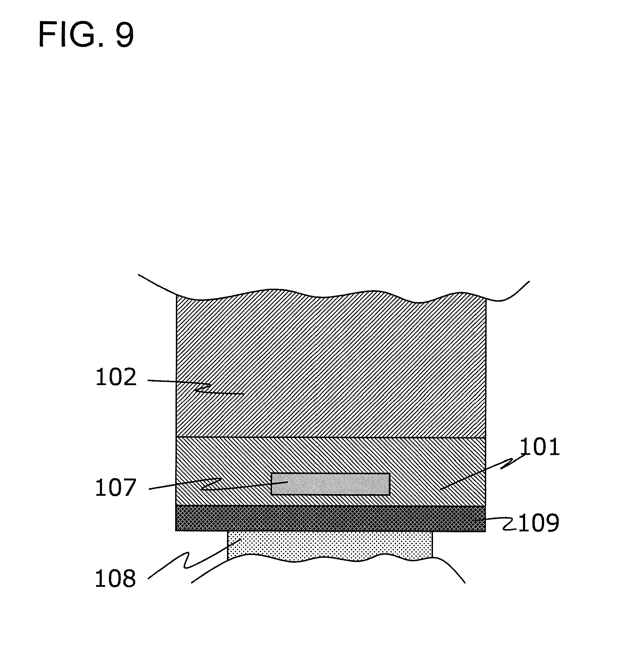

In a seventh exemplary embodiment, as illustrated in Fig. 9, the resin with the dilatancy property 109 is arranged at one side of the first glass substrate 101 that is opposed to the boundary of the second glass substrate 102.

<Eighth Exemplary Embodiment>

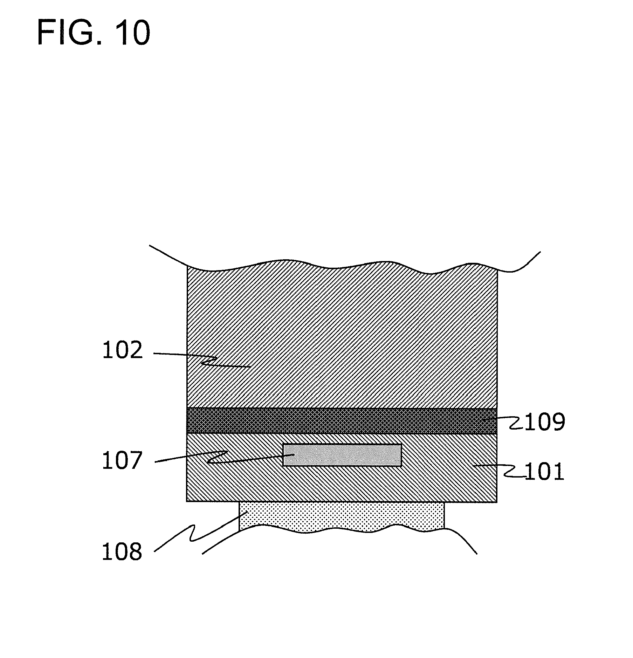

In an eighth exemplary embodiment, as illustrated in Fig. 10, the resin with the dilatancy property 109 is arranged at one side of the first glass substrate that is a boundary of the second glass substrate 102.

<Ninth Exemplary Embodiment>

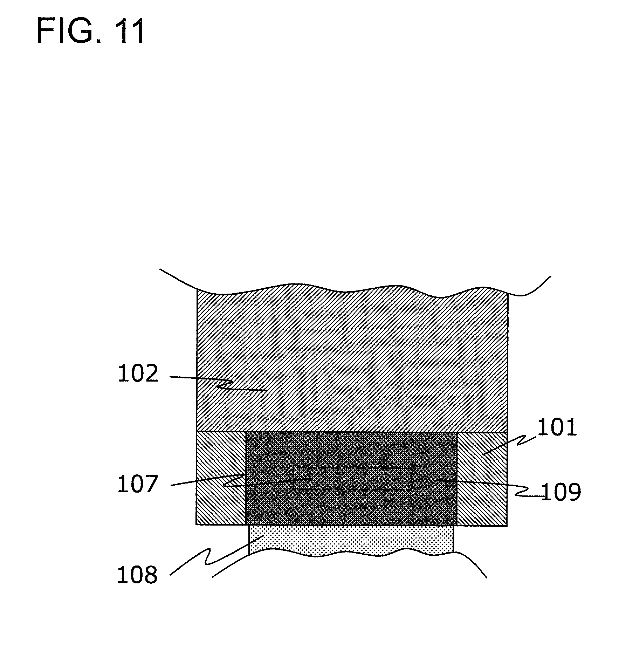

In a ninth exemplary embodiment, as illustrated in Fig. 11, the resin with the dilatancy property 109 is arranged at a region obtained by removing two sides of the first glass substrate 101 that are not opposed to a boundary of a second glass substrate from the region at which the resin with the dilatancy property is arranged in the electronic apparatus display unit according the first exemplary embodiment.

<Tenth Exemplary Embodiment>

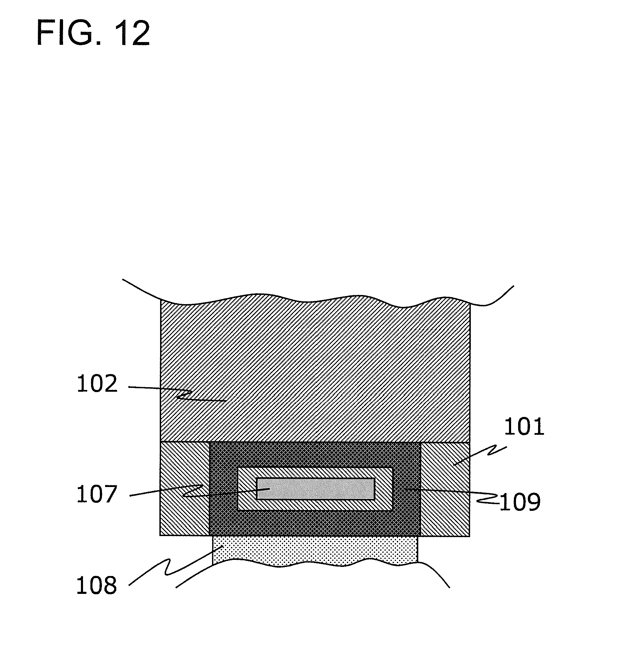

In a tenth exemplary embodiment, as illustrated in Fig. 12, the resin with the dilatancy property 109 is arranged at a region obtained by removing two sides of the first glass substrate 101 that are not opposed to a boundary of a second glass substrate from a region at which the resin with the dilatancy property is arranged in the electronic apparatus display unit according to the second exemplary embodiment.

<Eleventh Exemplary Embodiment>

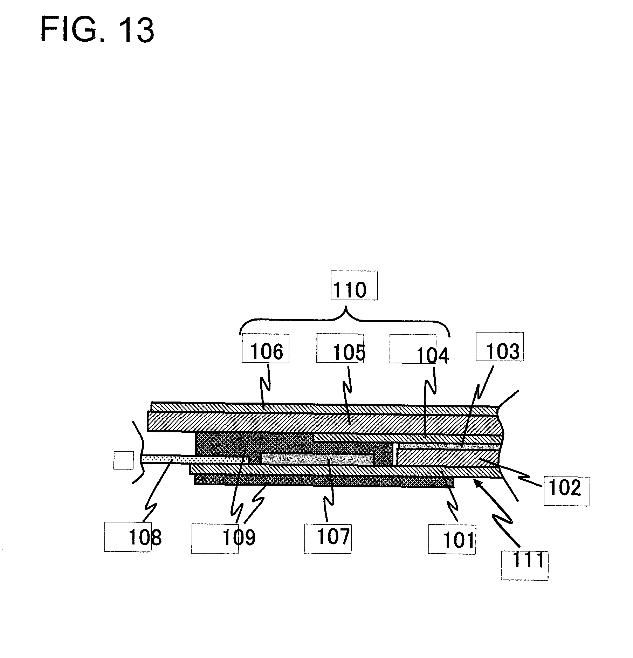

In an eleventh exemplary embodiment, as illustrated in Fig. 13, the resin with the dilatancy property 109 is arranged at a back side of the first glass substrate 101 and extend over a boundary of the second glass substrate 102.
In addition, as further exemplary embodiment, it can be also formed as a structure that the resin with the dilatancy property 109 is used at a connection part between an LCD unit (not shown) comprising the screen module 110, the LCD module 111 and a backlight module (not shown) and a case forming an outer part of the portable terminal apparatus.
The present invention is effective for the external force-resistant property improvement structure of the display part of the portable terminal apparatus requiring the external force-resistant property, such as a portable terminal apparatus provided with an exposed display unit, and especially, is applicable to a portable compact electronic apparatus provided with an exposed display unit, such as a portable terminal apparatus, smart-phone, tablet-type PC apparatus, which further development and popularization are pursued.
The entire disclosures of each prior art literature such as the above patent literatures are incorporated herein by reference thereto. It should be noted that changes and deformations of the modes or exemplary embodiments may be done within the entire disclosure (inclusive of each element of respective claims, each element of respective example and each element of respective figures etc.) of the present invention and on the basis of the basic technical concept thereof. Also, it should be noted that a variety of combinations or selections of various elements as disclosed in each exemplary embodiment, each exemplary embodiment and each Figure may be made within the scope of the claims of the present invention. That is, it should be noted that the present invention also includes various changes and deformations which can be made by a person skilled in the art on the basis of all the disclosure inclusive of the claims and technical concept. Especially, as to the numerical range described in the application, it should be interpreted that the arbitrary numerical values or narrow ranges which are contained within the range concerned as what is indicated concretely, even if there is no special description.

In addition, the further object, the purpose, and development mode of the present invention are made clear also from the entire disclosed matters of the present invention containing the scope of claims and Drawings.

REFERENCE SIGNS LIST

| | |
|---|---|
| 101 | first glass substrate |
| 102 | second glass substrate |
| 103 | ultraviolet curable transparent resin |
| 104 | touch panel |
| 105 | screen glass |
| 106 | glass safety film |
| 107 | LCD (Liquid Crystal Display) driver IC (Integrated Circuit) |
| 108 | FPC (Flexible Printed Circuit) |
| 109 | resin with a dilatancy property |
| 110 | screen module |
| 111 | LCD module |
| 1601 | metal frame |
| 1602 | resin |

**Claims**

1. An electronic apparatus display unit, comprising:

   a screen module and an LCD module that are integrated with a transparent resin to form an LCD (Liquid Crystal Display) modular structure; and
   a resin with a dilatancy property that is arranged in a gap between the screen module and a first glass substrate in the LCD modular structure.

2. The electronic apparatus display unit according to claim 1, wherein
   the resin with the dilatancy property is arranged in a shape of an approximate square ring around an LCD driver IC (Integrated Circuit).

3. The electronic apparatus display unit according to claim 1, wherein
   the resin with the dilatancy property is arranged at three sides of the first glass substrate that are not a boundary of a second glass substrate.

4. The electronic apparatus display unit according to claim 1, wherein
   the resin with the dilatancy property is arranged at a boundary of a second glass substrate and at two sides of the first glass substrate that are not opposed to the boundary.

5. The electronic apparatus display unit according to claim 1, wherein
   the resin with the dilatancy property is arranged at a boundary of a second glass substrate and at one side of the first glass substrate that is opposed to the boundary.

6. The electronic apparatus display unit according to claim 1, wherein
   the resin with the dilatancy property is arranged at two sides of the first glass substrate that are not opposed to a boundary of a second glass substrate.

7. The electronic apparatus display unit according to claim 1, wherein
   the resin with the dilatancy property is arranged at one side of the first glass substrate that is opposed to a boundary of a second glass substrate.

8. The electronic apparatus display unit according to claim 1, wherein
   the resin with the dilatancy property is arranged at one side of the first glass substrate that is a boundary of a second glass substrate.

9. A portable terminal apparatus comprising the display unit described in any one of claims 1 to 8.

10. A portable terminal apparatus, comprising:

    a display unit, wherein
    the display unit comprises:

       a screen module and an LCD module that are integrated with a transparent resin to form an LCD (Liquid Crystal Display) modular structure; and
       a resin with a dilatancy property that is arranged in a gap between the screen module and a first glass substrate in the LCD modular structure.

# FIG. 1

(a)

(b) A-A cross-sectional arrow view of (a)

(c) B-B cross-sectional arrow view of (b)

# FIG. 2

# FIG. 3

(a)

(b)

(c)

110
{ 106  105  104 }  103

(d) A-A cross-sectional arrow view of (c)

(e) B-B cross-sectional arrow view of (d)

# FIG. 4

102

101

107

109

108

# FIG. 5

102

107

108

101

109

# FIG. 6

# FIG. 7

FIG. 8

# FIG. 9

# FIG. 10

102

109

107

101

108

# FIG. 11

102

107

108

101

109

# FIG. 12

102

101

107

109

108

# FIG. 13

FIG. 14

# FIG. 15

(a)

(b)

(c)

(d) A-A cross-sectional arrow view of (c)

## INTERNATIONAL SEARCH REPORT

| International application No. |
| --- |
| PCT/JP2013/065389 |

### A. CLASSIFICATION OF SUBJECT MATTER
*G02F1/1333*(2006.01)i, *G02F1/1345*(2006.01)i, *G09F9/00*(2006.01)i

According to International Patent Classification (IPC) or to both national classification and IPC

### B. FIELDS SEARCHED

Minimum documentation searched (classification system followed by classification symbols)
G02F1/1333, G02F1/1345, G09F9/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2010-61026 A (Hitachi Displays, Ltd.), 18 March 2010 (18.03.2010), paragraphs [0025] to [0044]; fig. 2 to 4 & US 2010/60601 A | 1-10 |
| A | JP 2011-18508 A (Seiko Epson Corp.), 27 January 2011 (27.01.2011), paragraphs [0008] to [0012], [0084] to [0085], [0093] to [0097], [0103]; fig. 4, 8 to 11 (Family: none) | 1-10 |
| A | JP 2007-48789 A (Dainippon Printing Co., Ltd.), 22 February 2007 (22.02.2007), paragraphs [0049] to [0050] (Family: none) | 1-10 |

☐ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 July, 2013 (08.07.13) | Date of mailing of the international search report<br>16 July, 2013 (16.07.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012128239 A
- JP 2009069335 A
- WO 2008146538 A1
- WO 2008142918 A1

**Non-patent literature cited in the description**

- TMD TFT-LCD for mobile phones which an improved shock resistance is developed. *FPD HOT NEWS,* 29 May 2007, http://www.e-ex-press.co.jp/past/fpd_0705.htm.